Europäisches Patentamt

(19) European Patent Office

Office européen des brevets

(11) Numéro de publication : **0 089 057 B1**

(12) **FASCICULE DE BREVET EUROPÉEN**

(45) Date de publication du fascicule du brevet :
11.11.87

(21) Numéro de dépôt : 83102531.7

(22) Date de dépôt : 15.03.83

(51) Int. Cl.⁴ : **G 02 B 6/44**, H 02 G 15/14

(54) **Tête de câble pour câble immergé à fibres optiques.**

(30) Priorité : 17.03.82 FR 8204505

(43) Date de publication de la demande :
21.09.83 Bulletin 83/38

(45) Mention de la délivrance du brevet :
11.11.87 Bulletin 87/46

(84) Etats contractants désignés :
DE FR GB IT

(56) Documents cités :
DE-A- 3 006 131
FR-A- 2 363 243
GB-A- 2 025 650
GB-A- 2 027 932
GB-A- 2 091 901
US-A- 4 107 451
PATENTS ABSTRACTS OF JAPAN, vol. 5, no. 154 (P-82)(826), 29 septembre 1981
JOURNAL OF OPTICAL COMMUNICATIONS, vol. 1, no. 2, novembre 1980, pages 58-63, Fachverlag Schiele & Schön, Berlin, DE; H.HORIMA et al.: "Characteristics of jelly-filled optical cables"
INSTITUTE OF ELECTRONIC AND COMMUNICATION ENGINEERING OF JAPAN, INTERNATIONAL CONFERENCE ON INTEGRATED OPTICS AND OPTICAL FIBRE COMMUNICATION, TECHNICAL DIGEST, 18-20 juillet 1977, pages 281-284, Tokyo, JP; H.MURATA et al.: "Recent development of optical fiber and cable for public communication"

(73) Titulaire : **LES CABLES DE LYON Société anonyme dite:**
**170 quai de Clichy**
**F-92111 Clichy Cedex (FR)**

(72) Inventeur : **Guazzo, Lucien**
**77, rue de la Paix**
**F-62100 Calais (FR)**

(74) Mandataire : **Weinmiller, Jürgen et al**
**Lennéstrasse 9 Postfach 24**
**D-8133 Feldafing (DE)**

EP 0 089 057 B1

## Description

La présente invention concerne un dispositif de raccordement entre un câble immergé à fibres optiques et un répéteur comportant un câble d'accès des fibres optiques au répéteur, ledit câble étant constitué notamment d'un cœur solide contenant les fibres optiques, d'une voûte en fils d'acier, d'un tube de cuivre rétreint sur la voûte d'une gaine isolante.

Ce dispositif de raccordement réalise l'interface entre le répéteur et le câble dans une liaison immergée, notamment sous-marine à fibres optiques.

Pour des raisons de fabrication, le répéteur et le câble de ligne doivent être assemblés au stade final de la constitution de la liaison.

Pour les câbles à fibres optiques, cette opération finale d'assemblage oblige la liaison à comporter un moyen permettant de résorber la surlongueur de fibres nécessaire à la jonction.

La présente invention a pour but de procurer un dispositif de raccordement qui assure une jonction entre répéteur et câble capable de supporter de fortes sollicitations mécaniques sans déformation préjudiciable, et d'assurer une bonne étanchéité à l'eau.

La pose d'un câble dans les fonds sous-marins allant de 0 à 400 mètres, nécessite l'emploi d'une armure en fils d'acier protégés par une gaine thermoplastique, pour renforcer ce câble, qui peut être accroché accidentellement par des objets quelconques, en particulier des filets de pêcheurs.

Pour des profondeurs supérieures à 400 mètres, l'emploi d'une armure n'est plus nécessaire.

Le dispositif de raccordement selon l'invention est caractérisé en ce que l'extrémité dudit câble est fixée à une pièce de raccordement par l'intermédiaire d'une bague conique et d'un remplissage en résine durcissable, en ce que le dispositif comprend un moyen de stockage d'un excès de longueur des fibres optiques, et en ce que le câble d'accès comprend un tube relié au moyen de stockage et dans lequel les fibres optiques s'étendent librement.

Avantageusement un manchon de bourrage disposé autour d'une gaine de protection limite la flexion du câble au niveau de l'extrémité de la pièce d'ancrage, côté extérieur de la tête.

Selon un premier exemple de réalisation, le moyen de stockage est une boîte à mou dans laquelle est refoulée la fibre optique excédentaire.

Selon un autre exemple de réalisation, le moyen de stockage est un mandrin où vient s'enrouler l'excès de longueur de fibres comme décrit dans le document FR-A-2 519 149.

D'autres modes de réalisation du dispositif de raccordement montrent que le câble ne dispose pas d'une armure en fils d'acier protégée par une gaine thermoplastique ; le moyen de stockage et la pièce de raccordement sont alors bloqués en translation dans la pièce d'ancrage par une pièce de retenue, ou le moyen de stockage, c'est-à-dire la boîte à mou, est située dans le répéteur et le dispositif de raccordement ne comporte alors que les pièces nécessaires à la tenue en traction du câble et le câble d'accès.

On décrit ci-après à titre d'exemple et en référence aux figures du dessin annexé plusieurs exemples de réalisation de l'invention.

La figure 1 représente en élévation une extrémité d'un câble connu avec ses différents composants.

La figure 2 représente un dispositif de raccordement selon l'invention avec armure dont le moyen de stockage est une boîte à mou libre en translation dans la pièce d'ancrage, car si le câble subit une traction intempestive, l'armure va supporter cet effort. Le câble possède donc une possibilité de déplacement suffisante pour ne pas subir les effets de cette traction.

La figure 3 représente un dispositif de raccordement selon l'invention sans armure dont le moyen de stockage est également une boîte à mou bloquée en translation dans la pièce d'ancrage.

La figure 4 est une vue de détail des figures 2 et 3 représentant une boîte à mou.

La figure 5 représente les opérations de jonction des fibres optiques dans le cas de la fig. 4.

La figure 6 représente une variante selon l'invention, selon laquelle le câble dispose d'une armure et le moyen de stockage est un mandrin libre en translation dans la pièce d'ancrage, car si le câble subit une traction intempestive, l'armure va supporter cet effort. Le câble possède donc une possibilité de déplacement suffisante pour ne pas subir les effets de cette traction.

La figure 7 représente une autre variante selon l'invention, selon laquelle le câble est sans armure, et le moyen de stockage est un mandrin bloqué en translation dans la pièce d'ancrage.

La figure 8 est une vue agrandie de détail des figures 6 et 7 représentant un mandrin.

La figure 9 représente une tête de câble sans armure dont la pièce de raccordement est bloquée en translation par une pièce de retenue, le moyen de stockage étant une boîte à mou située dans le répéteur.

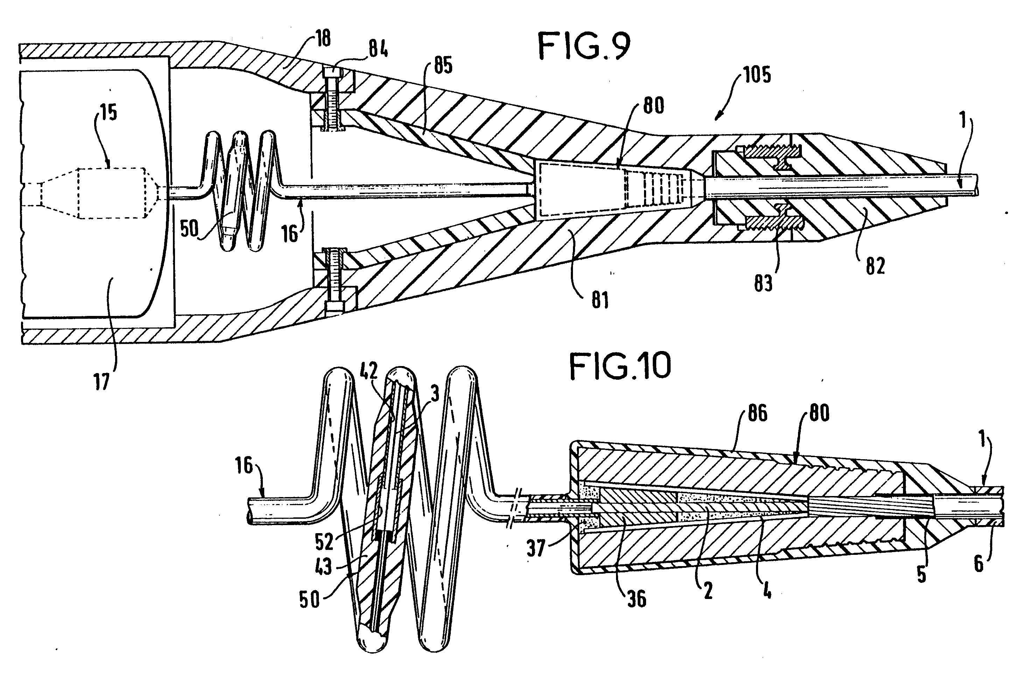

La figue 10 est une vue en détail de la figure 9 représentant la pièce de raccordement et le câble d'accès.

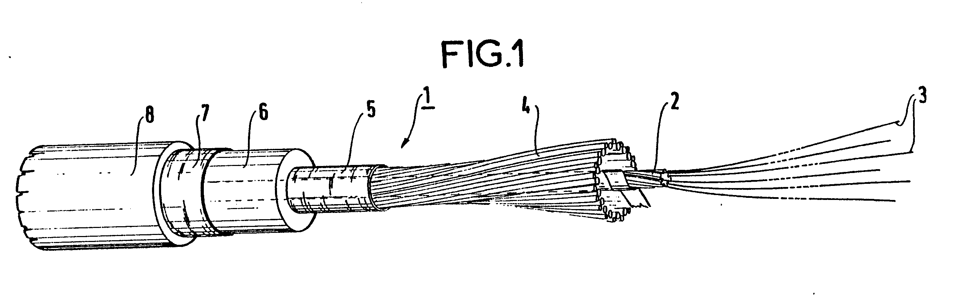

Dans la figure 1, on voit un câble de la ligne 1, comportant un cœur solide 2 contenant les fibres optiques 3, une voûte en fils d'acier 4, un tube de cuivre 5 rétreint sur la voûte, une gaine isolante 6 en matière thermoplastique, un conducteur de retour 7, une gaine de protection 8 en matière thermoplastique.

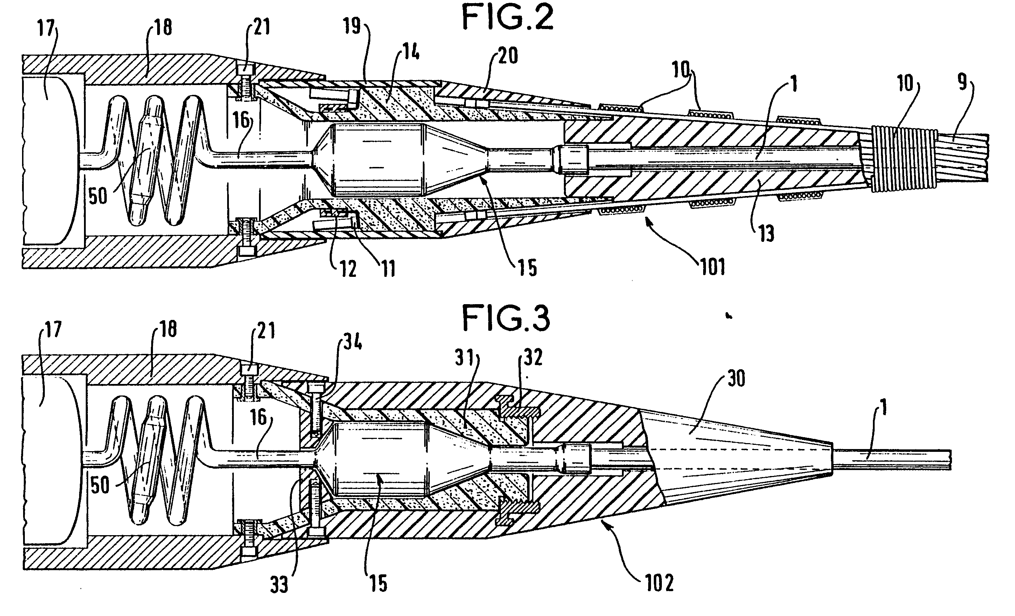

Comme on le voit dans la figure 2, le câble 1 est protégé à l'extérieur d'une tête de câble 101 par une armure 9. Cette armure est maintenue en place sur un manchon de bourrage 13 par l'intermédiaire de frettes 10, et elle est fixée à une pièce d'ancrage 14 par des fourreaux 11 sertis. Des anodes de zinc 12 évitent la corrosion desdits fourreaux. Une boîte à mou 15 est libre en translation dans la pièce d'ancrage 14. Un tube gainé 16 sortant de la boîte à mou 15 constitue le câble d'accès à un répéteur 17. Ce câble d'accès présente trois spires prévoyant un débattement axial et un renflement 50 de la gaine, qui protège un joint bateau décrit par la suite.

Un cylindre de maintien 19 assure une meilleure rigidité de la pièce d'ancrage 14 sur le boîtier 18 du répéteur 17. La pièce d'ancrage 14 est fixée sur ledit boîtier de répéteur par des boulons 21.

Dans la figure 3 le câble 1 ne comporte pas d'armure, et à l'extrémité de la tête de câble 102 il est recouvert par un manchon de bourrage 30 qui empêche une trop grande flexion du câble. Ce manchon est vissé sur une pièce d'ancrage 31 au moyen d'un insert métallique 32. La boîte à mou 15 est maintenue en translation dans la pièce d'ancrage 31, au moyen d'une pièce de retenue 33 elle-même fixée à la pièce d'ancrage par des vis 34. Le câble d'accès 16 sortant de la boîte à mou 15 donne accès au répéteur 17. Ce câble d'accès présente trois spires prévoyant un débattement axial et un renflement 50 de la gaine, qui protège un joint bateau décrit par la suite. La pièce d'ancrage est fixée sur le boîtier de répéteur 18 par des boulons 21.

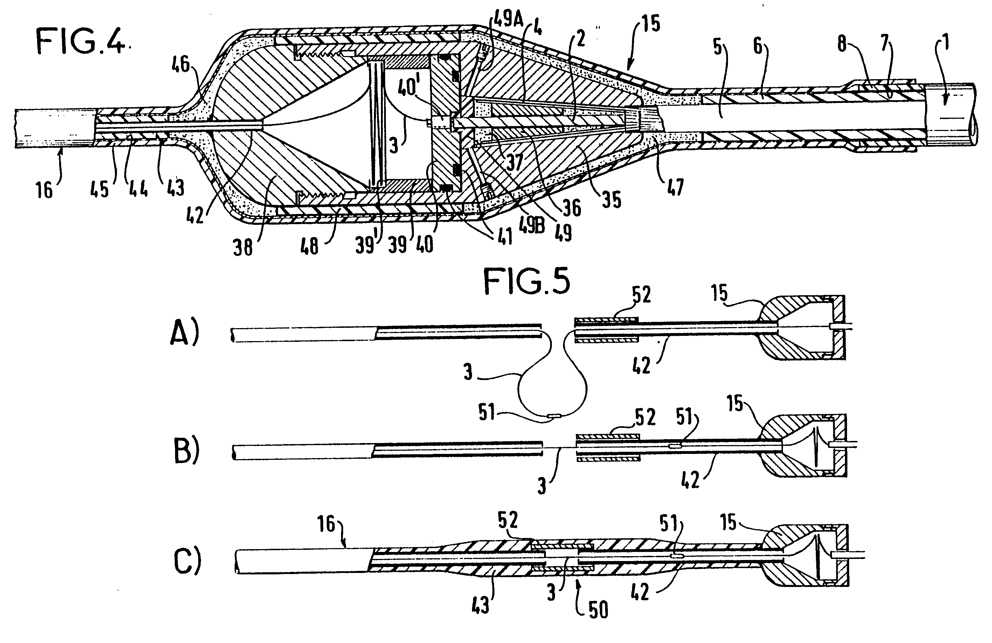

Dans la figure 4, la boîte à mou 15 est constituée d'une cavité formée par une pièce de raccordement 35 et un bouchon 38. Le câble 1 est fixé à la pièce de raccordement 35 au moyen d'une bague conique 36 qui vient épanouir la voûte 4 de fils d'acier dans un alésage de ladite pièce de raccordement 35.

Un remplissage de fermeture 37 en résine durcissable solidifie la liaison de la voûte et de la pièce de raccordement. Le bouchon 38 est vissé sur la pièce de raccordement 35 et une étanchéité est prévue par l'intermédiaire de joints toriques 41, enfermés dans une pièce 40 qui est serrée au moyen d'une rondelle 39. Cette pièce 40 comporte un passage étanche 40' pour les fibres optiques. Un remplissage 49 en polyisobutylène est effectué à travers deux orifices 49A et 49B fermés ultérieurement par deux bouchons. La rondelle 39 présente un épaulement 39' qui permet de lover les fibres optiques 3 environ au milieu de ladite boîte 15 pour donner auxdites fibres un rayon de courbure maximum. Le câble d'accès 16 est constitué d'un petit tube 42 pénétrant dans le bouchon 38 et soudé sur celui-ci et d'une gaine isolante 43 en matière thermoplastique. La gaine isolante 6 du câble 1 et la gaine isolante 43 du tube 42 sont reconstituées par deux moulages de fermeture 46, 47 et par une gaine isolante 48. Les deux moulages 46, 47 peuvent éventuellement être remplacés par un moulage unique.

Un conducteur de retour 44 et une gaine de protection 45 recouvrant la gaine 43 et la boîte à mou 15 sont raccordés au conducteur de retour 7 et à la gaine de protection 8 du câble 1.

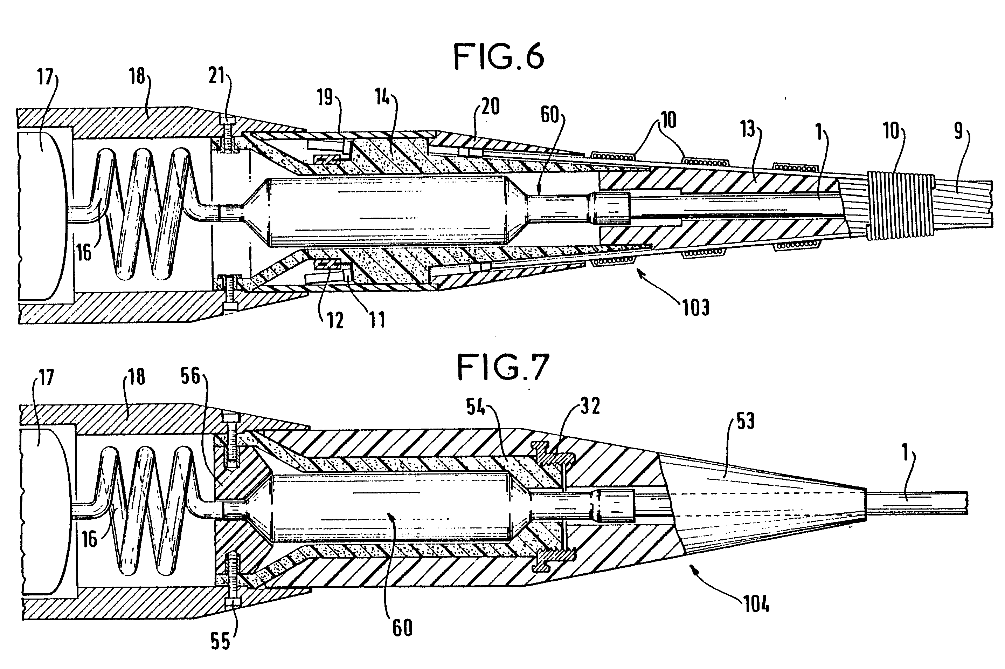

Dans la figure 5 montrant les opérations de jonction des fibres optiques, on voit successivement l'opération A de soudure proprement dite des fibres 3 recouvertes au niveau de la soudure par un manchon 51, en B l'opération de remplissage de la boîte à mou, puis en C, le recouvrement du câble d'accès 16 par un joint bateau 52 et enfin le recouvrement de l'ensemble par une gaine 43 présentant un renflement 50 au niveau du joint bateau.

Dans la figure 6, le câble 1 est protégé à l'extérieur de la tête de câble 103 par une armure 9. Cette armure est maintenue en place sur le manchon de bourrage 13 par l'intermédiaire de frettes 10, et elle est fixée à la pièce d'ancrage 14 par des fourreaux 11 sertis. Des anodes de zinc 12 évitent la corrosion desdits fourreaux. Le moyen de stockage 60 comporte un mandrin 61 qui est libre en translation dans la pièce d'ancrage 14. Un câble d'accès 16 sous forme d'un tube gainé sortant du moyen 60 donne accès au répéteur 17. Ce câble d'accès présente trois spires prévoyant un débattement axial.

Un cylindre de maintien 19 assure une meilleure rigidité de la pièce d'ancrage sur le boîtier 18 du répéteur 17. La pièce d'ancrage est fixée sur ledit boîtier de répéteur par des boulons 21.

Dans la figure 7, le câble 1 ne comporte pas d'armure, et à l'extrémité de la tête de câble 104 il est recouvert par un manchon de bourrage 53, qui empêche une trop grande flexion du câble. Ce manchon de bourrage 53 est vissé sur une pièce d'ancrage 54, au moyen de l'insert métallique 32. Le moyen 60 est maintenu en translation dans la pièce d'ancrage 54 au moyen d'une pièce de retenue 56, toutes deux étant fixées au boîtier de répéteur 18, par des vis 55, un tube gainé 16 sortant du moyen 60 constitue un câble d'accès à un répéteur 17. Ce câble d'accès présente trois spires prévoyant un débattement axial.

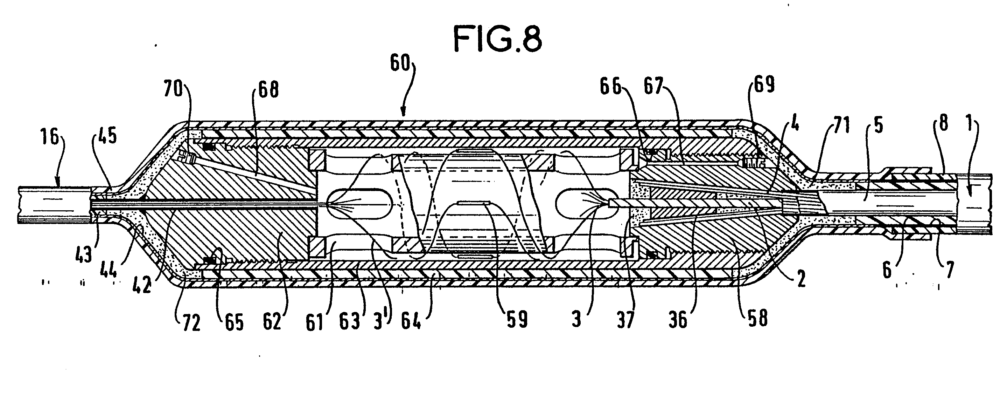

Dans la figure 8, le moyen 60 est constitué principalement de deux pièces de raccordement 58, 62, du mandrin 61 et d'un tube conteneur 63. Le câble 1 est fixé à la pièce de raccordement 48 au moyen de la bague conique 36 qui vient épanouir la voûte 4 de fils d'acier dans un alésage conique de ladite pièce de raccordement 58. Un remplissage de fermeture 37 en résine durcissable solidifie la liaison de la voûte et de la pièce de raccordement. Les fibres optiques 3, 3' sont soudées l'une à l'autre, les soudures étant protégées par des manchons 59 ; elles sont ensuite enroulées sur le mandrin 61. Le tube 42 est engagé dans la pièce de raccordement 62 et soudé sur celle-ci. Le tube conteneur 63, préalablement enrobé d'une gaine isolante 64, est vissé sur les deux pièces de raccordement 58, 62, et des joints toriques 65, 66 assurent l'étanchéité. Les orifices 67, 68 servent au remplissage du mandrin par un produit visqueux tel que le polyisobutylène. Une fois le remplissage terminé, ces orifices sont fermés par les bouchons 69, 70. La gaine isolante 6 du câble 1 et la gaine isolante 43 du tube 42 sont reconstituées par deux moulages de fermeture 71, 72 et par la gaine isolante 64 du tube conteneur 63. Un conducteur de retour 44 et une gaine de protection 45, recouvrant la gaine 43 et l'ensemble 15 sont raccordés au conducteur de retour 7 et à la gaine de protection 8 du câble 1.

Dans la figure 9, le câble 1 est protégé à l'extérieur de la tête de câble 105 par un manchon de bourrage 82 vissé sur une pièce d'ancrage 81 au moyen d'un insert métallique 83. Le câble 1 est bloqué dans une pièce de raccordement 80, elle-même bloquée en translation dans la pièce d'ancrage 81 au moyen d'une pièce de retenue 85.

Un surmoulage polyéthylène 86 entoure la pièce de raccordement 80.

Des boulons 84 maintiennent la tête de câble 105 sur le boîtier du répéteur 18. Le moyen de stockage qui est dans ce cas une boîte à mou 15 équivalente à la figure 4, est situé dans le répéteur 17. Le câble d'accès 16 présente trois spires prévoyant un débattement axial et un renflement 50 de la gaine, qui protège un joint bateau.

Dans la figure 10, le câble 1 est fixé à la pièce de raccordement 80 au moyen d'une bague conique 36 qui vient épanouir la voûte 4 de fils d'acier dans un alésage conique de ladite pièce de raccordement 81. Un remplissage de fermeture 37 en résine durcissable solidifie la liaison de la voûte et de la pièce de raccordement. Le tube 42 reçoit les fibres optiques 3 et l'opération de jonction des fibres s'effectue suivant le procédé de la figure 5. Dès que le joint bateau 52 est mis en place, on recouvre le tube d'une gaine de protection 43 présentant un renflement 50. Le surmoulage polyéthylène 86 se raccorde à la gaine de protection 43 et à la gaine isolante 6 du câble 1. Un conducteur de retour et une gaine de protection, non représentés, enrobent le câble 1, le surmoulage 86 et la gaine de protection 43.

Sans sortir du cadre de l'invention, le câble peut ne pas posséder de conducteur de retour protégé par une gaine de protection.

**Revendications**

1. Dispositif de raccordement entre un câble immergé (1) à fibres optiques et un répéteur (17) comportant un câble d'accès (16) des fibres optiques au répéteur, ledit câble immergé étant constitué notamment d'un cœur solide (2) contenant les fibres optiques (3), d'une voûte en fils d'acier (4), d'un tube de cuivre (5) rétreint sur la voûte, d'une gaine isolante (6), caractérisée en ce que l'extrémité dudit câble immergé est fixée à une pièce de raccordement (35, 58) par l'intermédiaire d'une bague conique (36) et d'un remplissage en résine durcissable, en ce que le dispositif comprend un moyen de stockage (15, 60) d'un excès de longueur de fibres optiques, et en ce que le câble d'accès comprend un tube (42) relié au moyen de stockage et dans lequel les fibres optiques (3) s'étendent librement.

2. Dispositif de raccordement selon la revendication 1, caractérisé en ce qu'un manchon de bourrage (13, 30, 53, 82) disposé autour d'une gaine de protection (8) limite la flexion du câble immergé au niveau d'une extrémité d'une pièce d'ancrage (14, 31, 54, 81) côté extérieur du dispositif de raccordement.

3. Dispositif de raccordement selon la revendication 1, caractérisé en ce que le moyen de stockage est une boîte à mou (15) dans laquelle est refoulée la fibre optique excédentaire.

4. Dispositif de raccordement selon la revendication 3, caractérisé en ce que la boîte à mou (15) comporte à l'intérieur, une rondelle (39) présentant un épaulement (39') qui permet de lover les fibres optiques (3) environ au milieu de ladite boîte pour donner auxdites fibres un rayon de courbure maximum.

5. Dispositif de raccordement selon la revendication 1, caractérisé en ce que le moyen de stockage (60) comporte un mandrin (61) où vient s'enrouler l'excès de longueur de fibres.

6. Dispositif de raccordement selon la revendication 2 pour un câble ne disposant pas d'une armure en fils d'acier protégés par une gaine thermoplastique, caractérisé en ce que le moyen de stockage (15, 60) et la pièce de raccordement (35, 58) sont bloqués en translation dans la pièce d'ancrage (31, 54) par une pièce de retenue (33, 56).

7. Dispositif de raccordement selon la revendication 4 pour un câble ne disposant pas d'une armure en fils d'acier protégés par une gaine thermoplastique, caractérisé en ce que la boîte à mou (15) est située dans le répéteur et la tête de câble ne comporte alors que les pièces nécessaires à la tenue en traction du câble et le câble d'accès (16).

**Claims**

1. A connection device between a submerged optical fiber cable (1) and a repeater (17) comprising a cable (16) for the access of the optical fibers to the repeater, said submerged cable being constituted in particular by a solid core (2) containing the optical fibers (3), an arch of steel wires (4), a copper tube (5) swaged down over the arch, an insulating sheath (6), characterized in that the end of said submerged cable is fixed to a connection piece (35, 38) via a conical ring (36) and a hardenable resin filling, that the device comprises a storing means (15, 60) for an excess of length of the optical fibers, and in that the access cable comprises a tube (42) connected to the storing means and allowing the optical fibers (3) to extend freely therein.

2. A connection device according to claim 1, characterized in that a tapering sleeve (13, 30, 53, 82) disposed around a protection sheath (8) limits the bending of the submerged cable at the level of one end of an anchoring piece (14, 31, 54, 81) on the outside of the connection device.

3. A connection device according to claim 1, characterized in that the storing means is a box for storing slack (15) in which the excess length of the optical fiber is taken up.

4. A connection device according to claim 3, characterized in that the slack box (15) comprises on its inside a ring (39) presenting a shoulder (39') which permits the coiling of the optical fibers (3) substantially in the middle of said box so as to give the fibers a maximum curvature radius.

5. A connection device according to claim 1, characterized in that the storing means (60) comprises a mandrel (61) around which said excess length of fibers is wound.

6. A connection device according to claim 2 for a cable which does not dispose of an armour of steel wires protected by a thermoplastic sheath, characterized in that the storing means (15, 60) and the connection piece (35, 58) are blocked in translation in the anchoring piece (31, 54) by a stopping piece.

7. A connection device according to claim 4 for a cable which does not dispose of an armour of steel wires protected by a thermoplastic sheath, characterized in that the slack box (15) is situated in the repeater and the cable head thus only comprises the pieces necessary for maintaining in traction the cable and the access cable (16).

**Patentansprüche**

1. Anschlußvorrichtung zwischen einem Lichtleitfaser-Seekabel (1) und einem Verstärker (17), mit einem Kabel (16) für den Zugang der Lichtleitfasern zum Verstärker, wobei das Seekabel insbesondere aus einem festen Kern (2), der die Lichtleitfasern (3) enthält, einer Umhüllung aus Stahldrähten (4), einem Kupferrohr (5), das auf die Umhüllung aufgeschrumpft ist, und einer Isolierhülle (6) besteht, dadurch gekennzeichnet, daß des Ende des Seekabels über einen konischen Ring (36) und eine Füllung aus härtbarem Harz an einem Verbindungsstück (35, 58) befestigt ist, daß die Vorrichtung ein Lagermittel (15, 60) für einen Längenüberschuß an Lichtleitfasern aufweist, und daß das Zugangskabel ein Rohr (42) aufweist, das mit dem Lagermittel verbunden ist und in dem die Lichtleitfasern (3) sich frei erstrecken.

2. Anschlußvorrichtung nach Anspruch 1, dadurch gekennzeichnet, daß eine um eine Schutzhülle (8) herum angeordnete Stopfbuchse (13, 30, 53, 82) die Krümmung des Seekabels in Höhe eines Verankerungsstücks (14, 31, 54, 81) auf der Außenseite der Anschlußvorrichtung begrenzt.

3. Anschlußvorrichtung nach Anspruch 1, dadurch gekennzeichnet, daß das Lagermittel eine Kapsel für lose Fasern (15) ist, in die der Überschuß an Lichtleitfaser gesteckt ist.

4. Anschlußvorrichtung nach Anspruch 3, dadurch gekennzeichnet, daß die Faserkapsel (15) im Inneren eine Lochscheibe (39) mit einer Schulter (39') aufweist, die es ermöglicht, die Lichtleitfasern (3) etwa in der Mitte der Faserkapsel aufzurollen, um den Fasern einen größtmöglichen Krümmungsradius zu verleihen.

5. Anschlußvorrichtung nach Anspruch 1, dadurch gekennzeichnet, daß das Lagermittel (60) einen Dorn (61) aufweist, auf den sich der Längenüberschuß der Fasern aufrollen läßt.

6. Anschlußvorrichtung nach Anspruch 2 für ein Kabel, das keine von einer thermoplastischen Hülle geschützte Stahldrahtbewehrung aufweist, dadurch gekennzeichnet, daß das Lagermittel (15, 60) und das Verbindungsstück (35, 38) in dem Verankerungsstück (31, 54) durch ein Haltestück (33, 56) translatorisch blockiert sind.

7. Anschlußvorrichtung nach Anspruch 4 für ein Kabel, das keine von einer thermoplastischen Hülle geschützte Stahldrahtbewehrung aufweist, dadurch gekennzeichnet, daß die Faserkapsel (15) sich in dem Verstärker befindet und der Kabelkopf dann nur die Teile, die für die Zugspannung des Kabels notwendig sind, und das Zugangskabel (16) aufweist.

FIG.1

FIG.2

FIG.3

FIG.4.

FIG.5

A)

B)

C)

FIG.6

FIG.7

# FIG.8

0 089 057

# FIG.9

# FIG.10

0 089 057